# EUROPÄISCHE PATENTSCHRIFT

(11) **EP 2 455 202 B1**
(45) Veröffentlichungstag und Bekanntmachung des Hinweises auf die Patenterteilung: **04.03.2020**
(21) Anmeldenummer: 11185141.6
(22) Anmeldetag: 14.10.2011
(51) Int. Cl.: B29C 70/54, B29B 11/16, B29C 33/20, B29C 70/48

(54) **Verfahren zur Herstellung eines zur Versteifung eines herzustellenden Kunststoffteils vorgesehenen Vorformlings**
Method for producing a pre-form for reinforcing a plastic part to be produced
Procédé de fabrication d'une préforme prévue pour rigidifier une pièce en plastique devant être fabriquée

(30) Priorität: 22.11.2010 DE 102010044213
(43) Veröffentlichungstag der Anmeldung: 23.05.2012
(73) Patentinhaber: Bayerische Motoren Werke Aktiengesellschaft, 80809 München (DE)
(72) Erfinder: Theinert, Joerg, 84051 Ohu (DE); Schmidt, Falko, 84061 Ergoldsbach (DE)

(56) Entgegenhaltungen:
- DE-A1- 10 153 035
- GB-A- 1 473 686
- JP-A- H04 369 512

## Beschreibung

Die vorliegende Erfindung betrifft ein Verfahren zur Herstellung eines zur Versteifung eines herzustellenden Kunststoffteils vorgesehenen Vorformlings gemäß den Merkmalen des Patentanspruches 1.

Ein derartiges Verfahren ist aus der DE 101 53 035 A bekannt. Zum technischen Hintergrund der Erfindung zählt die GB 1 473 686 A.

Faserverstärkte Kunststoffteile können in einem sogenannten RTM-Prozess (Rapid-Transfer-Moulding-Prozess) hergestellt werden. Zur Versteifung des herzustellenden Kunststoffteils kann ein sogenannter Vorformling (Preform) verwendet werden. Bei dem Vorformling handelt es sich um ein aus einer Fasermatte hergestelltes "Gebilde", dessen Form im Wesentlichen der Form des herzustellenden Kunststoffteils entspricht. Zur Herstellung eines Kunststoffteils wird der vorgeformte Vorformling in ein Formwerkzeug eingebracht, welches mindestens zwei relativ zueinander verfahrbare Werkzeughälften, die im Folgenden auch als "Oberwerkzeug" und "Unterwerkzeug" bezeichnet werden, aufweist. Im zusammengefahrenen Zustand definieren die beiden Werkzeughälften eine Formkavität, welche der Form des herzustellenden Kunststoffteils entspricht. In das geöffnete Formwerkzeug wird der aus Fasermaterial (z.B. aus Glasfasern und/oder Kohlefasern und/oder Metalldrähten etc.) hergestellte Vorformling eingebracht. Anschließend wird das Formwerkzeug geschlossen und flüssiges Kunststoffmaterial in die Formkavität injiziert, wobei der Vorformling mit Kunststoffmaterial durchtränkt wird. Bei geschlossenem Formwerkzeug lässt man das Kunststoffmaterial aushärten. Nach dem Aushärten wird das Formwerkzeug geöffnet und Kunststoffmaterial kann entnommen werden.

Aufgabe der Erfindung ist es, ein Verfahren zur Herstellung eines Vorformlings anzugeben.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Bei der Erfindung geht es um ein Verfahren zur Herstellung eines zur Versteifung eines herzustellenden Kunststoffteils vorgesehenen Vorformlings. Der Begriff "Vorformling" ist äußerst breit auszulegen. Gemeint ist ein Gebilde, das annähernd oder weitgehend oder auch nur teilweise der Form eines herzustellenden Kunststoffteils entspricht und beim Spritzen des Kunststoffteils in dasselbe eingespritzt wird. Für die Herstellung eines derartigen Vorformlings muss zunächst ein Umformwerkzeug bereit gestellt werden. Das Umformwerkzeug weist ein Unterwerkzeug und ein relativ dazu verfahrbar angeordnetes Oberwerkzeug auf. In einer Öffnungsstellung des Umformwerkzeugs ist das Oberwerkzeug von dem Unterwerkzeug einen Öffnungsweg weit weggefahren.

Anschließend wird eine "Versteifungsmatte" in einem Bereich zwischen dem Unterwerkzeug und dem Oberwerkzeug aufgespannt. Der Begriff "Versteifungsmatte" ist äußerst breit zu interpretieren. Er umfasst insbesondere ein einlagiges oder mehrlagiges im Wesentlichen flächiges, mattenartiges Gebilde, das ganz oder teilweise aus Fasermaterial, wie z.B. Kohlenfasern, Glasfasern, Metalldrähten, Textilfäden etc. besteht. Die Versteifungsmatte kann in der Form eines Gewebes, Gewirks, Gestricks, Geleges oder in anderen Strukturen oder Mischformen daraus vorliegen. Die Fasermatte wird mittels eines Spannrahmens, der ein Spannrahmen-Oberteil und ein Spannrahmen-Unterteil aufweisen kann, im Bereich zwischen dem Unterwerkzeug und dem Oberwerkzeug aufgespannt. Es kann vorgesehen sein, dass sich der Spannrahmen rahmenartig bzw. ringartig um das Umformwerkzeug in einem Abstand von dem Umformwerkzeug herum erstreckt.

Nachdem die Versteifungsmatte mittels des Spannrahmens aufgespannt worden ist, wird das Umformwerkzeug geschlossen. Das Schließen kann durch Heranfahren des Oberwerkzeugs an das Unterwerkzeug erfolgen. Dabei wird eine z.B. mittels einer Hydraulik auf das Oberwerkzeug ausgeübte Schließkraft zum Teil von dem Oberwerkzeug über eine "obere Federeinrichtung" auf das Spannrahmen-Oberteil übertragen. Bei der oberen Federeinrichtung kann es sich beispielsweise um eine Anordnung aus Gasdruckfedern, Spiralfedern oder um eine andersartige Federanordnung handeln. Durch die von dem Oberwerkzeug auf das Spannrahmen-Oberteil übertragene Federkraft wird der gesamte Spannrahmen entgegen von einer unteren Federeinrichtung auf das Spannrahmen-Unterteil ausgeübten Gegendruckkraft in Richtung des Unterwerkzeugs gedrückt, bis der Spannrahmen eine "Spannrahmenendstellung" erreicht hat. In der Spannrahmenendstellung ist das Umformwerkzeug nahezu oder vollständig geschlossen, was dazu führt, dass die Versteifungsmatte entsprechend der Form einer durch das Oberwerkzeug und das damit zusammenwirkende Unterwerkzeug gebildeten Formkavität umgeformt wird. Bei geschlossenem Umformwerkzeug bilden nämlich eine Oberseite des Unterwerkzeugs und eine Unterseite des Oberwerkzeugs eine Formkavität aus, welche der Form des herzustellenden Vorformlings (Preform) entspricht.

Nach dem Umformen der Versteifungsmatte zu dem Vorformling kann das Umformwerkzeug durch nach oben Verschieben des Oberwerkzeugs geöffnet und der Vorformling entnommen werden. Durch das nach oben Verschieben des Oberwerkzeugs wird auch das Spannrahmen-Oberteil entlastet, was zum Öffnen des Spannrahmens führt. Sobald der Spannrahmen den eingespannten Rand des Vorformlings freigibt, kann dieser entnommen werden. Vergegenwärtigt man sich, dass bei geschlossenem Umformwerkzeug der Spannrahmen mit einer sehr großen Kraft von z.B. 5000 N entgegen der von unteren Federeinrichtung ausgeübten Gegendruckkraft nach unten gedrückt werden muss, so besteht ein ganz zentraler Gedanke der vorliegenden Erfindung darin, das nach oben Drücken des Spannrahmen-Unterteils durch die untere Federeinrichtung durch eine Dämpfereinrichtung zu dämpfen. Würde man keine derartige Dämpfung vorsehen, so würde das Spannrahmen-Unterteil, sobald es freigegeben wird, von der von der unteren Federeinrichtung ausgeübten Gegendruckkraft nach oben schnellen, was es zu vermeiden gilt.

Nach einer Weiterbildung der Erfindung wird das Spannrahmen-Unterteil bei geschlossenem Umformwerkzeug relativ zu dem Unterwerkzeug festgehalten. Das Spannrahmen-Unterteil kann beispielsweise kraft- oder formschlüssig festgehalten werden. In Betracht kommt insbesondere eine mechanische Verriegelung, z.B. durch einen oder mehrere Bolzen, die beispielsweise über einen oder mehrere zugeordnete Hydraulikzylinder bewegt werden können. Wird das Umformwerkzeug geöffnet, so bleibt das Spannrahmen-Unterteil zunächst in der festgehaltenen Position, wobei das Spannrahmen-Oberteil zusammen mit dem Oberwerkzeug nach oben gefahren wird, so dass der entstandene Vorformling entnommen werden kann. Nach der Entnahme des Vorformlings wird das durch die untere Federeinrichtung nach wie vor nach oben gespannte Spannrahmen-Unterteil losgelassen bzw. entriegelt und fährt gedämpft durch die Dämpfereinrichtung vergleichsweise langsam nach oben, so dass eine weitere Versteifungsmatte für einen weiteren herzustellenden Vorformling in den Spannrahmen eingespannt werden kann.

Im Folgenden wird die Erfindung im Zusammenhang mit der Zeichnung näher erläutert. Es zeigen:

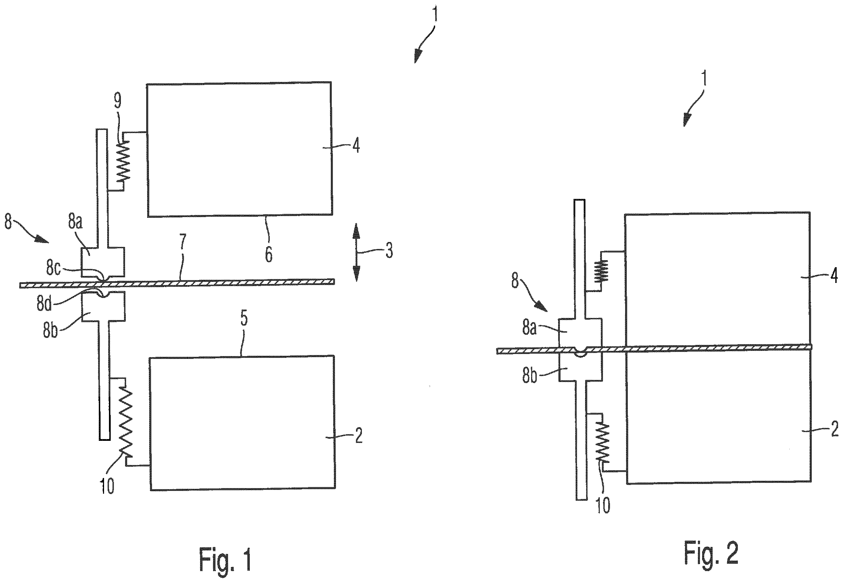

Fig. 1-4 Verschiedene Phasen in der Herstellung eines Vorformlings.

Figur 1 zeigt ein Umformwerkzeug 1, das zur Herstellung eines Vorformlings (Preform) vorgesehen ist. Das Umformwerkzeug 1 weist ein Unterwerkzeug 2 auf, das z.B. ortsfest angeordnet sein kann, und ein relativ zu dem Unterwerkzeug 2 in einer Verschieberichtung 3 verschieblich angeordnetes Oberwerkzeug 4. Das Unterwerkzeug 2 weist eine Oberseite 5 und das Oberwerkzeug 4 eine Unterseite 6 auf. Bei geschlossenem Umformwerkzeug 1, d.h. wenn das Oberwerkzeug 4 und das Unterwerkzeug 2 herangefahren ist, definieren die Oberseite 5 und die Unterseite 6 zwischen sich eine Formkavität, die der Form eines später herzustellenden Kunststoffteils zumindest teilweise oder weitgehend entspricht.

Der Vorformling wird aus einer im Ausgangszustand im Wesentlichen flächigen bzw. im Wesentlichen ebenen Versteifungsmatte 7 hergestellt. Die Versteifungsmatte besteht aus einem Fasermaterial, z.B. aus Kohlefasern und/oder Glasfasern und/oder Metalldrähten und/oder Textilfäden etc. Sie kann ein- oder mehrlagig sein. Hinsichtlich ihrer Struktur kann es sich bei der Fasermatte um ein Gewebe, ein Gewirke, ein Gestrick, ein Gelege oder um Mischformen daraus handeln.

Bei geöffnetem Umformwerkzeug wird die Fasermatte 7 mittels eines Spannrahmens 8, der ein Spannrahmen-Oberteil 8a und ein Spannrahmen-Unterteil 8b aufweist, im Bereich zwischen dem Unterwerkzeug 2 und dem Oberwerkzeug 4 aufgespannt. Der Spannrahmen 8 kann sich ringartig um das gesamte Umformwerkzeug 1 herum erstrecken. In den Figuren 1 bis 4 ist von dem Spannrahmen 8 lediglich ein im linken Bereich des Umformwerkzeugs 1 befindlicher Teil dargestellt. Die Berührflächen, mit denen das Spannrahmen-Oberteil 8a und Spannrahmen-Unterteil 8b die Fasermatte berühren, können mit einer Profilierung versehen sein, die bei dem hier gezeigten Ausführungsbeispiel durch eine an der Unterseite des Spannrahmen-Oberteils vorgesehene Erhebung und eine damit zusammenwirkende, an der Oberseite des Spannrahmen-Unterteils 8b vorgesehene nutartige Vertiefung 8d gebildet ist.

Das Spannrahmen-Oberteil 8a ist über eine obere Federeinrichtung 9 elastisch mit dem Oberwerkzeug 4 verbunden. Die obere Federeinrichtung 9 kann beispielsweise durch eine entlang des Umfangs des Umformwerkzeugs 1 angeordnete Gasdruckfederanordnung gebildet sein.

Das Spannrahmen-Unterteil 8b ist von unten her durch eine untere Federanordnung 10 abgestützt, die ebenfalls beispielsweise durch mehrere entlang des Umfangs des Umformwerkzeugs 1 angeordnete Gasfedern gebildet sein kann. Bei dem hier gezeigten Ausführungsbeispiel stützt sich die das Spannrahmen-Unterteil 8b tragende untere Federanordnung an dem Unterwerkzeug ab. Alternativ dazu könnte die untere Federanordnung 10 auch an einem Rahmen des Umformwerkzeugs, an einem Fundament einer Fertigungshalle etc. befestigt bzw. abgestützt sein.

Nachdem die Versteifungsmatte 7 mittels des Spannrahmens 8 zwischen den auseinander gefahrenen Werkzeughälften 2, 4 aufgespannt worden ist, wird das Umformwerkzeug geschlossen. Dabei wird das Oberwerkzeug 4 mittels einer hier nicht näher dargestellten Schließvorrichtung, bei der er sich beispielsweise um eine Schließhydraulik handeln kann, nach unten verfahren. Ein Teil der von der Schließvorrichtung auf das Oberwerkzeug ausgeübten Schließkraft wird von der oberen Federeinrichtung 9 auf das Spannrahmen-Oberteil 8a übertragen. Dadurch wird der gesamte Spannrahmen 8 mit nach unten verfahren und zwar entgegen der von der unteren Federeinrichtung 10 auf das Spannrahmen-Unterteil 8b ausgeübten, nach oben wirkenden Gegendruckkraft.

Figur 2 zeigt den Zustand, in dem das Umformwerkzeug 1 vollständig geschlossen ist und der Spannrahmen 8 seine untere Endstellung erreicht hat. In diesem Zustand ist die Versteifungsmatte 7 entsprechend der Form der durch die beiden Werkzeughälften 2, 4 gebildeten Formkavität umgeformt.

Bevor das Umformwerkzeug 1 wieder geöffnet und der fertige Vorformling entnommen werden kann, wird das Spannrahmen-Unterteil 8b relativ zu dem Unterwerkzeug 2 in der bereits in Figur 2 erreichten Endstellung festgehalten. Zum Festhalten des Spannrahmen-Unterteils 8b kann beispielsweise eine durch mehrere Bolzen 11 gebildete mechanische Arretierungseinrichtung vorgesehen sein.

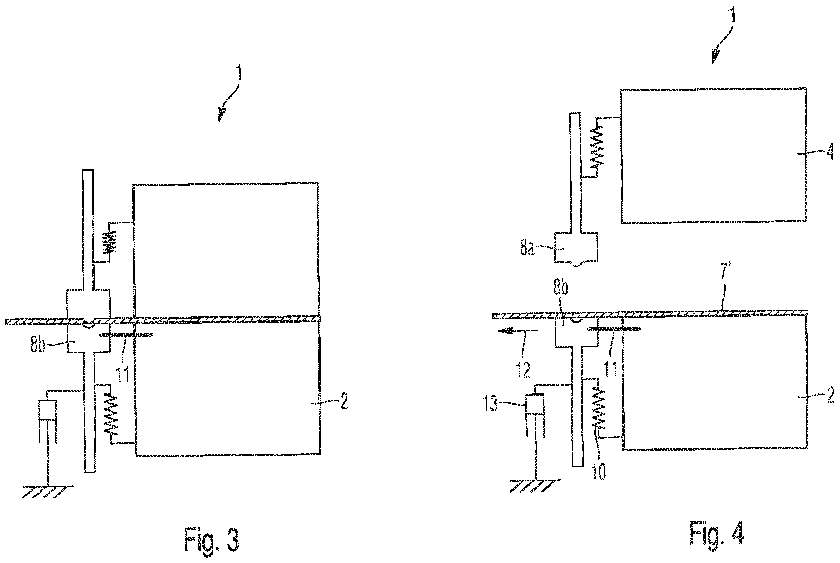

Nachdem das Spannrahmen-Unterteil 8b in seiner unteren Endstellung fixiert ist, wird das Umformwerkzeug 1 durch nach oben Verfahren des Oberwerkzeugs 4 geöffnet. Dadurch wird das Spannrahmen-Oberteil 8a entlastet und schließlich ebenfalls mit nach oben verfahren. In der in Figur 4 gezeigten Öffnungsstellung kann der fertige Vorformling 7' entnommen werden. Nach dem Entnehmen des Vorformlings 7' kann auch der untere Spannrahmenteil wieder freigegeben werden, z.B. durch nach links in Richtung des Pfeils 12 Verschieben des bzw. der Arretierungsbolzen 11. Um zu vermeiden, dass die in der unteren Federeinrichtung 10 gespeicherte Federenergie das Spannrahmen-Unterteil 8b unkontrolliert nach oben schnellen lässt, ist eine Dämpfervorrichtung 13 vorgesehen, welche das nach oben Schieben des Spannrahmen-Unterteils 8b dämpft.

Bei der Dämpfervorrichtung 13 kann es sich beispielsweise um eine hydraulische Dämpfervorrichtung handeln.

## Patentansprüche

1. Verfahren zur Herstellung eines zur Versteifung eines herzustellenden Kunststoffteils vorgesehenen Vorformlings (7'), mit folgenden Schritten:
• Bereitstellen eines geöffneten Umformwerkzeugs (1), das ein Unterwerkzeug (2) und ein relativ dazu verfahrbar angeordnetes Oberwerkzeug (4) aufweist, wobei das Oberwerkzeug (4) von dem Unterwerkzeug (2) einen Öffnungsweg weit weggefahren ist,
• Aufspannen einer Versteifungsmatte (7), insbesondere einer aus Fasermaterial bestehenden Versteifungsmatte (7), in einem Spannrahmen (8), der ein Spannrahmen-Oberteil (8a) und ein Spannrahmen-Unterteil (8b) aufweist, in einem Bereich zwischen dem Unterwerkzeug (2) und dem Oberwerkzeug (4),
• Schließen des Umformwerkzeugs (1), indem das Oberwerkzeug (4) an das Unterwerkzeug (2) herangefahren wird, wobei eine auf das Oberwerkzeug (4) ausgeübte Schließkraft zum Teil von dem Oberwerkzeug (4) über eine obere Federeinrichtung (9) auf das Spannrahmen-Oberteil (8a) übertragen und der Spannrahmen (8) dadurch entgegen einer von einer unteren Federeinrichtung (10) ausgeübten Gegendrucckraft in Richtung des Unterwerkzeugs (2) bis in eine Spannrahmenendstellung gedrückt wird,
• Öffnen des Umformwerkzeugs (1) durch nach oben Verschieben des Oberwerkzeugs (4), derart, dass das nach oben Drücken des Spannrahmen-Unterteils (8b) durch die untere Federeinrichtung (10) durch eine Dämpfereinrichtung (13) gedämpft wird, um ein nach oben Schnellen des Spannrahmen-Unterteils (8b) zu vermeiden.

2. Verfahren nach Anspruch 1,
**dadurch gekennzeichnet, dass** das Spannrahmen-Unterteil (8b) bei geschlossenem Umformwerkzeug (1) relativ zu dem Unterwerkzeug (2) festgehalten wird.

3. Verfahren nach Anspruch 2,
**dadurch gekennzeichnet, dass** das Festhalten des Spannrahmen-Unterteils (8b) durch eine formschlüssige Arretierung des Spannrahmen-Unterteils (8b) erfolgt.

4. Verfahren nach einem der vorangehenden Ansprüche,
**dadurch gekennzeichnet, dass** beim nach oben Verschieben des Oberwerkzeugs (4) die obere Federeinrichtung (9) zumindest teilentlastet und das Spannrahmen-Oberteil (8a) dabei ebenfalls nach oben verschoben wird, wohingegen das Spannrahmen-Unterteil (8b) zunächst in seiner Endstellung relativ zu dem Unterwerkzeug (2) festgehalten bleibt.

5. Verfahren nach einem der Ansprüche 2 bis 4,
**dadurch gekennzeichnet, dass** der Vorformling (7') bei festgehaltenem Spannrahmen-Unterteil (8b) aus dem Umformwerkzeug (1) entnommen wird.

6. Verfahren nach Anspruch 5,
**dadurch gekennzeichnet, dass** das Spannrahmen-Unterteil nach dem Entnehmen des Vorformlings (7') freigegeben und durch die untere Federeinrichtung (10) und die mit dem Spannrahmen-Unterteil zusammenwirkende Dämpfereinrichtung (13) gedämpft nach oben verschoben wird.

7. Verfahren nach einem der Ansprüche 1 bis 6,
**dadurch gekennzeichnet, dass** sich die untere Federeinrichtung (10) zwischen dem Unterwerkzeug (2) und dem Spannrahmen-Unterteil (8b) abstützt.

8. Verfahren nach einem der Ansprüche 1 bis 7,
**dadurch gekennzeichnet, dass** die Dämpfung des Spannrahmen-Unterteils (8b) durch eine hydraulische Dämpfereinrichtung (13) erfolgt.

## Claims

1. A method for producing a preform (7') intended for stiffening a plastics-material part which is to be produced, having the following steps:
• providing an opened forming tool (1), which has a bottom tool (2), and a top tool (4) which is arranged movably relative thereto, wherein the top tool (4) is moved away from the bottom tool (2) by an opening stroke,
• clamping a stiffening mat (7), especially a stiffening mat (7) comprising fibrous material, in a clamping frame (8) which has an upper clamping frame part (8a) and a lower clamping frame part (8b), in a region between the bottom tool (2) and the top tool (4),
• closing the forming tool (1) by moving the top tool (4) up to the bottom tool (2), wherein a closing force exerted on the top tool (4) is transmitted in part from the top tool (4) by way of an upper spring device (9) onto the upper clamping frame part (8a) and the clamping frame (8) is thereby pressed, counter to a counter-pressure force exerted by a lower spring device (10), in the direction of the bottom tool (2) into a clamping frame end position,
• opening the forming tool (1) by upwards displacement of the top tool (4), such that the pressing upwards of the lower clamping frame part (8b) by the lower spring device (10) is damped by a damper means (13), in order to avoid the lower clamping frame part (8b) leaping upwards.

2. A method according to Claim 1,
**characterised in that** the lower clamping frame part (8b) is secured relative to the bottom tool (2) when the forming tool (1) is closed.

3. A method according to Claim 2,
**characterised in that** the securing of the lower clamping frame part (8b) takes place by positive locking of the lower clamping frame part (8b).

4. A method according to one of the preceding claims,
**characterised in that** upon the upwards displacement of the top tool (4) stress on the upper spring device (9) is at least partially relieved and the upper clamping frame part (8a) in so doing is likewise displaced upwards, whereas the lower clamping frame part (8b) initially remains secured in its end position relative to the bottom tool (2).

5. A method according to one of Claims 2 to 4,
**characterised in that** the preform (7') is removed from the forming tool (1) while the lower clamping frame part (8b) is secured.

6. A method according to Claim 5,
**characterised in that** the lower clamping frame part is released once the preform (7') has been removed, and is displaced upwards in damped manner by the lower spring device (10) and the damper means (13) which cooperates with the lower clamping frame part.

7. A method according to one of Claims 1 to 6,
**characterised in that** the lower spring device (10) is supported between the bottom tool (2) and the lower clamping frame part (8b).

8. A method according to one of Claims 1 to 7,
**characterised in that** the damping of the lower clamping frame part (8b) takes place by a hydraulic damper means (13).

## Revendications

1. Procédé de fabrication d'une préforme (7') destinée à la rigidification d'une pièce en matériau synthétique devant être fabriquée comprenant les étapes suivantes consistant à :
- se procurer un outil de mise en forme ouvert (1), comprenant un outil inférieur (2) et un outil supérieur (4) monté mobile par rapport à celui-ci, l'outil supérieur (4) étant écarté de l'outil inférieur (2) d'une course d'ouverture,
- tendre une natte de renfort (7), en particulier une natte de renfort (7) constituée d'un matériau fibreux dans un cadre de serrage (8) qui comporte une partie supérieure de cadre de serrage (8a) et une partie inférieure de cadre de serrage (8b) dans une zone comprise entre l'outil inférieur (2) et l'outil supérieur (4),
- fermer l'outil de mise en forme (1) en déplaçant l'outil supérieur (4) sur l'outil inférieur (2), la force de fermeture exercée sur l'outil supérieur (4) étant en partie transmise de l'outil supérieur (4) à la pièce supérieure du cadre de serrage (8a), par l'intermédiaire d'un dispositif de ressort supérieur (9) et le cadre de serrage (8) étant ainsi comprimé contre une force de compression antagoniste exercée par un dispositif de ressort inférieur (10) en direction de l'outil inférieur (2) jusqu'à une position finale du cadre de serrage,
- ouvrir l'outil de mise en forme (1) par translation vers le haut de l'outil supérieur (4) de sorte que la compression vers le haut de la pièce inférieure du cadre de serrage (8b) soit amortie par le dispositif de ressort inférieur (10) par un dispositif amortisseur (13) pour empêcher un déplacement brusque vers le haut de la pièce inférieure (8b) du cadre de serrage.

2. Procédé conforme à la revendication 1,
**caractérisé en ce que**
la partie inférieure du cadre de serrage (8b) est retenu par rapport à l'outil inférieur (2) lorsque l'outil de mise en forme (1) est fermé.

3. Procédé conforme à la revendication 2,
**caractérisé en ce que**
le maintien de la partie inférieure (8b) du cadre de serrage est obtenu par blocage par une liaison par la forme de la partie inférieure (8b) du cadre de serrage.

4. Procédé conforme à l'une des revendications précédentes,
**caractérisé en ce que**
lors de la translation vers le haut de l'outil supérieur (4) le dispositif de ressort supérieur (9) est au moins partiellement détendu et la partie supérieure du cadre de serrage (8a) est ainsi également déplacée par translation vers le haut, alors que la partie inférieure du cadre de serrage (8b) reste tout d'abord retenue dans sa position finale par rapport à l'outil inférieur (2).

5. Procédé conforme à l'une des revendications 2 à 4,
**caractérisé en ce que**
la préforme (7') est extraite de l'outil de mise en forme (1) lorsque la partie inférieure (8b) du cadre de serrage est retenue.

6. Procédé conforme à la revendication 5,
**caractérisé en ce que**
la partie inférieure du cadre de serrage est libérée après l'extraction de la préforme (7') et est déplacée par translation vers le haut en étant amortie par le dispositif de ressort supérieur (10) et le dispositif amortisseur (13) coopérant avec la partie inférieure de l'outil de serrage.

7. Procédé conforme à l'une des revendications 1 à 6,
**caractérisé en ce que**
le dispositif de ressort inférieur (10) s'appuie entre l'outil inférieur (2) et la partie inférieure du cadre de serrage (8b).

8. Procédé conforme à l'une des revendications 1 à 7,
**caractérisé en ce que**
l'amortissement de la partie intérieure (8b) du cadre de serrage est effectué par un dispositif amortisseur hydraulique (13).
